# EUROPEAN PATENT APPLICATION

(11) **EP 2 796 230 A1**
(43) Date of publication of application: **29.10.2014**
(21) Application number: 13164676.2
(22) Date of filing: 22.04.2013
(51) Int. Cl.: B22F 3/15, C22C 47/06

(54) **Method of manufacturing a metallic component by use of wire winding and hot isostatic pressing**

(71) Applicant: Gervaux Ltd, West Bridgford, Nottingham NG2 5JB (GB)
(72) Inventor: JARVIS, David John, Voorschoten (NL); VOICE, Wayne Eric, Nottingham, NG2 5JB (GB)
(74) Representative: Plougmann & Vingtoft A/S

(57) **Abstract**

The present invention relates to a method of manufacturing a metallic component (1) wherein a plurality of layers of metallic wire (7) is wound around a mandrel or inner layer (2). An outer layer of a metallic material is provided around the wound layers of wire (7) so that a canister (8) is obtained. The canister (8) is then evacuated and sealed before it placed in a hot isostatic pressing device (9) at high pressure and high temperature for a predetermined period of time. Hereby at least a majority of the windings of wire (7) consolidate and diffusion-bond to form the metallic component (1). In some embodiments of the invention, the canister (8) and/or the mandrel/inner layer (2) is/are not removed after the consolidation and thus forms an integral part of the component (1).

## Description

### FIELD OF THE INVENTION

The present invention relates to a method of manufacturing a metallic component, and in particular to a method comprising winding metallic wire around a mandrel or an inner layer of metallic material and using hot isostatic pressing to consolidate the wire material into a coherent structure within a canister.

### BACKGROUND OF THE INVENTION

Hot isostatic pressing (HIPping) is becoming an important manufacturing route e.g. for the production of aerospace and defence products. A major reason is that it can be used to save up to around 80% material usages when making final components, as compared to CNC machining. Hereby a better fly-to-buy ratio can be obtained. This ratio is used to describe the amount of material that is actually flown in an aerospace component divided by the amount of material purchased by the manufacturer; i.e. a measure of how much material you need to purchase in order to manufacture the final component. With a powder HIP process, one would typically start with fine 20-100 micron gas-atomised alloy powders poured and sealed into a mild-steel canister of the desired component shape and then isostatically press the components to near-net shape using high-pressure hot argon gas within a HIP vessel. Finally the mild steel canister is removed to reveal the alloy component. Manufacturing of components by powder metallurgy are e.g. disclosed in EP2275393 and EP1669144. However, not all materials are available in powder form and it can be very difficult to manufacture large components with tailor-made material structures from composite materials and powder. In addition, the component surface produced by interfacing with the mild steel canister is not always appropriate for resistance to fatigue initiation and aesthetic purposes.

The conventional way to make a titanium fuel tank is to superplastically deform two sheets into hemispheres and to TIG weld them together along the equator. Additional welds are also required at the neck of the tank. This entails considerable effort and welding skill and creates a high failure risk at the welds.

Therefore this process is expensive both because of the high skills needed and because of the need for subsequent non-destructive testing. Previous experience is that many failures and leakages occur at welds so the corresponding risk could be removed and the quality of the product improved by eliminating these welds.

WO 97/48601 discloses a method for making a rhenium rocket nozzle which comprises application of alternating layers of rhenium wire and deposited rhenium around a mandrel. A layer of molybdenum is applied to the assembly and the assembly is then subjected to HIPping.

Hence, an improved method of manufacturing metallic components would be advantageous, and in particular a more efficient and/or reliable manufacturing method would be advantageous.

### OBJECT OF THE INVENTION

It is an object of the present invention to provide a method of manufacturing a metallic component by which method the fly-to-buy ratio can be improved compared to traditional manufacturing methods, such as CNC machining.

It is another object of the invention to provide a method of manufacturing a metallic component by which method subsequent joining of sub-parts of the component can be avoided. Hereby a seamless component can be obtained.

It is another object of the invention to provide a method of manufacturing a metallic component by which method welding and the associated non-destructive testing (NDT) can be avoided.

It is another object of some embodiments of the invention to provide a method of manufacturing a metallic component by which method composite materials and functionally graded materials can be manufactured.

It is a further object of the present invention to provide an alternative to the prior art.

In particular, it may be seen as an object of the present invention to provide a method of manufacturing a metallic component that solves the above mentioned problems of the prior art.

### SUMMARY OF THE INVENTION

Thus, the above described object and several other objects are intended to be obtained in a first aspect of the invention by providing a method of manufacturing a metallic component, the method comprising
- providing a mandrel or an inner layer of a metallic material
- winding a plurality of layers of metallic wire around the mandrel inner layer so that each of at least a majority of subsequent layers of wire touches at least one adjacent layer of wire,
- providing an outer layer of a metallic material around the wound layers of wire so that a canister is obtained,
- evacuating and sealing the canister,
- placing the canister in a hot isostatic pressing device at high pressure and high temperature for a predetermined period of time in order to consolidate and diffusion-bond at least a majority of the windings of wire to form the metallic component.

The canister can be made from a material, such as mild steel, which is able to deform in response to the increased temperature and pressure during HIPping so that a dense alloy component is produced. Preferably the canister is made from the component alloy, i.e. the wire material, so that it becomes incorporated into the final component and imparts superior surface properties. This incorporation preferably includes diffusion bonding between the canister and the outer layers of wire taking place during the HIPping.

The temperature and pressure used during the HIPping will be dependent on the actual materials used and what would be necessary to ensure a good consolidation thereof. A pressure of 10-200 MPa and a temperature of 400-1400 °C will typically be used. The specific pressure and temperature profiles for a given process may e.g. be determined by computer simulations or by experimentation.

An important advantage of a method according to the present invention is that it can be used to produce seamless metallic structures, e.g. in cylindrical form. The avoidance of joining, welding and accredited non-destructive testing (NDT) of welds is a major cost saver with such a technology. Furthermore, the avoidance of welding increases the safety as welding points are considered to represent areas of a component having a higher risk of crack initiation e.g. due to possible residual thermal stresses and defects caused by the welding process.

In some embodiments of the invention, the mandrel or inner layer comprises one or more of the following surface features on an outer surface: groove, rib, and strut.

By "outer" is preferably meant facing away from the central axis of the mandrel or inner layer; this is the surface around which the wire is being wound. The mandrel/inner layer can e.g. be made by additive manufacturing which can be effectively used to provide intricate features. As will be described in relation to the figures, the mandrel/inner layer may also be made by incremental forming. By incremental forming is preferably meant that it is formed from a sheet of metal using a series of incremental deformations.

The canister and/or the mandrel/inner layer may be removed after the consolidation of the wire material. This removal can e.g. be done by machining or by selective chemical pickling, e.g. in nitric acid. Such a method will be known to a person skilled in the art.

Preferably, the canister and/or the mandrel/inner layer may not be removed after the consolidation and thus forms an integral part of the component. Or in other words, the canister and/or the mandrel/inner layer form(s) an integral part of the manufactured component. The incorporation of the canister into the component can e.g. be used to give the component a higher resistance to fatigue crack initiation. For such applications it may be preferred to use materials for the wire and the mandrel/inner layer and/or canister which can be diffusion bonded and consolidated together, such as being of the same material. Thus, the mandrel/inner layer and the canister may be made from mild steel or from a metal alloy, such as the alloy used for the wires.

In some embodiments of the invention, the mandrel is a solid part. By leaving such a mandrel in the component, the present invention can be used to produce solid components. This may e.g. be a convenient way of producing components with a core region, corresponding to the mandrel, of one type of material and outer layers, corresponding to the wound wires, of another type of material.

In some embodiments of the invention, the mandrel is made from a material having open porosity, such as having a lattice-like structure. This will typically be used for components where the mandrel is not removed but is forming part of the component. In this way it will be possible to obtain a component having high structural rigidity with a relatively low weight.

In some embodiments of the invention, wires made from a plurality of materials are used. It may e.g. be made from alternating layers of two types of materials having different mechanical and/or thermal properties so that the advantages of both materials can be combined in the resulting composite material. It can also be used to have different inner and outer layers, e.g. to combine a good resistance against chemical attack on one surface and against crack initiation on another surface. Alternatively, all of the windings of wire are made from the same material. Such types of composite materials may be impossible or very difficult to produce with traditional manufacturing methods.

In embodiments comprising a plurality of wire materials, the plurality of wires may be arranged to produce a functionally graded material through the thickness of the component. Functionally graded means that one or more characteristic parameters, such as the local stiffness, vary gradually through the thickness.

The wire may be made from one or more of the following materials or alloys therefrom: titanium, beryllium, aluminium, magnesium, nickel, cobalt, vanadium, zirconium, platinum, iridium, rhenium, palladium, tungsten, and nitrinol shape memory alloy.

At least some of the wire material may comprise reinforcement, such as SiC, BN, B or Al₂O₃ filaments. This can be used to manufacture components made from high strength composites. The use of ceramic additions, such as boron nitride (BN) can also be used for heavy ion and neutron shielding.

In some embodiments of the invention, fibres are wound around the mandrel or inner layer in combination with the metallic wires. A possible example is to arrange wound fibres in the gaps between the wires. If these fibres are of a smaller diameter than the metallic wires, a more dense pre-HIP structure can be obtained whilst a good coherence is obtained by the wires, even if no diffusion bonding takes place between the wires and the fibres.

The thickness of the wires may be in the range of 0.1 to 2 mm, such as 0.1 to 0.5 mm or 0.5 to 1 mm or 1 to 2 mm. The thickness or thicknesses will typically depend on the actual materials used, as some materials are available in wire form in a number of thicknesses, whereas other materials are only available in a limited size range. The wires may all be of the same thickness, or more thicknesses may be used to obtain a better packing and thereby a more dense pre-HIP structure. This may be particularly relevant for materials that do not easily deform during the HIPping process. The wires will typically be wound to form an array which is 0.5 to 30 mm thick, but other dimensions are also considered to be covered by the present invention.

In a second aspect, the present invention relates to a component manufactured according to any of the preceding claims.

The component may e.g. be a fuel tank, such as for liquid cryogenic or non-cryogenic propellants. An example is a seamless titanium fuel tank for use in space applications, such as for satellites or rockets. Such fuel tanks may include specially designed internal capillary channels for fluid management purposes. The dimensions of a fuel tank could be in the 0.2 to 1 m size range or in the 1 to 4 m size range. However, the sizes mentioned are not considered to be limiting for the claimed invention.

Another example of a component according to the present invention is a wheel. This will be described in more details in relation to the figures.

Another possible application would be for rocket nozzles made from refractory alloys and platinum group metals. Additionally the invention may find use in non-space applications, such as in the sectors of aeronautics, aero-engines, gas turbines, nuclear fission and fusion plants and defence products.

The first and second aspect of the present invention may each be combined with any other aspects. These and other aspects of the invention will be apparent from and elucidated with reference to the embodiments described hereinafter.

### BRIEF DESCRIPTION OF THE FIGURES

The method of manufacturing a metallic component according to the invention will now be described in more detail with regard to the accompanying figures. The figures show one way of implementing the present invention and is not to be construed as being limiting to other possible embodiments falling within the scope of the attached claim set.
Figure 1 shows schematically how the present invention can be used to manufacture a seamless component, such as a fuel tank.
Figure 2 shows schematically examples of outer surface features on the mandrel around which the wires are wound.
Figure 3 shows schematically a cross sectional view of wound wires before and after the HIPping process.
Figure 4a and 4b show schematically cross sectional views of examples of a solid and a lattice-like mandrel, respectively.
Figure 5 shows schematically a cross sectional view of wires comprising reinforcement and arranged so that a functionally graded component is obtained.
Figure 6 shows schematically a cross sectional view of fibres wound around the mandrel in combination with the metallic wires so that a component made of a composite material is obtained.
Figure 7 shows schematically a possible arrangement used to wind the wire around the mandrel.
Figure 8 shows schematically an embodiment of the invention in which the mandrel, in the form of an inner layer, and the canister are made by incremental forming of metal sheets.
Figure 9 shows schematically a cross sectional view of a wheel manufactured by use of the present invention.

### DETAILED DESCRIPTION OF AN EMBODIMENT

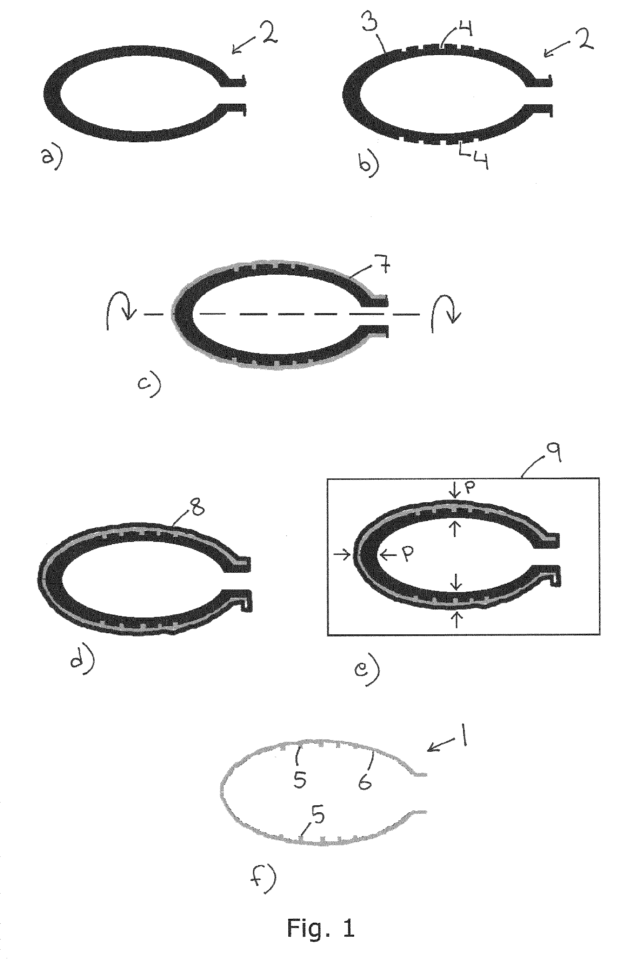

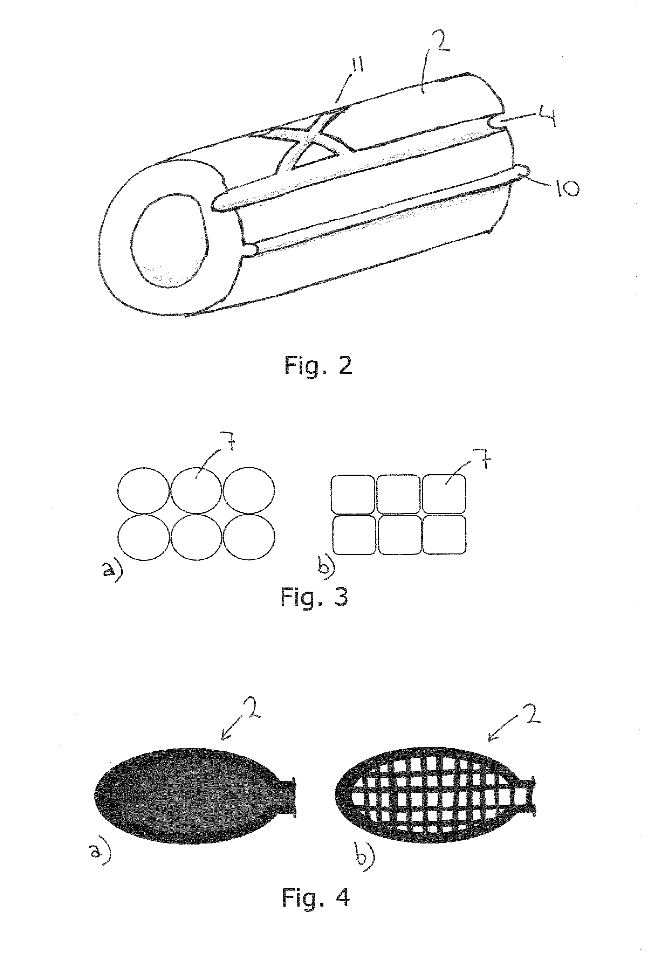

Figure 1 shows schematically the steps in a method according to the present invention used to manufacture a metallic component 1, exemplified as a fuel tank. Figure 1.a shows a mandrel 2 around which the metallic component 1 is to be formed. In the figures, the mandrel 2 is shown as a hollow structure, but as mentioned above, it is also possible to use a solid or a porous structure for the mandrel 2 if desired. The mandrel 2 may e.g. be made from mild steel and may be formed by additive manufacturing. The outer surface 3 of the mandrel 2 may also comprise additional features, such as grooves 4 as shown schematically in figure 1.b. Such features may easily be formed on the outer surface 3 during the additive manufacturing. The grooves 4 will result in corresponding ribs 5 being formed on the inner surface 6 of the final component 1 as will be shown in the following. Such ribs 5 may e.g. be used to stiffen the structure. When the component 1 is a fuel tank, protruding ribs (see figure 2) on the mandrel 2 can e.g. be used to form capillary-driven channels on the inner surface 6 of the tank for good propellant management.

The mandrel 2 is arranged in a rotatable manner, and a plurality of layers of metallic wire 7 is wound around the mandrel 2 to provide a thick array of wires; this is shown in figure 1.c. The wires 7 are wound so that each of at least a majority of subsequent layers of wire touches at least one adjacent layer of wire. In order to wind the wires at the end opposite to the opening of the tank, the mandrel is tilted, possibly at various angles, during a part of the winding process. This tilting is not shown in the figure, but it will typically be around an axis perpendicular to the plane of the cross section shown in the figure. For a fuel tank, the wire 7 may e.g. be made from a titanium alloy, and the total thickness may e.g. be in the order of 10 to 20 mm. The thickness need not be constant over the whole component 1; it may be designed to match the specific estimated stress and strain conditions of the component 1 during loading. These conditions may e.g. be determined from computer simulations or experiments.

When the desired amount of wire 7 has been wound, an outer layer of a metallic material is placed around the wound layers of wire so that a canister 8 is obtained as shown schematically in figure 1.d. Such a canister 8 may e.g. be a container which is typically made from mild steel. The canister 8 is then evacuated and sealed with a vent tube (not shown) in order to complete the canning process.

As shown in figure 1.e, the evacuated and sealed canister 8 is then placed in a hot isostatic pressing device 9 at high pressure P and high temperature for a predetermined period of time in order to consolidate and diffusion-bond at least a majority of the windings of wire 7 to form the metallic component 1. In the embodiment shown in figure 1.f, both the mandrel 2 and the canister 8 is removed; this may be done e.g. by machining or by selective chemical pickling, e.g. in nitric acid. Such a method will be known to a person skilled in the art. For other embodiments of the invention, the canister 8 and/or the mandrel 2 is/are not removed after the consolidation and thus forms an integral part of the component 1; see examples below. Figure 1.f also shows how the grooves 4 in the mandrel 2 as shown in figure 1.b have resulted in the formation on ribs 5 on the inner surface 6 of the component 1. Figure 2 shows schematically how the mandrel can be provided with grooves 4, ribs 10, and struts 11.

Figure 3.a shows schematically a cross sectional view of two layers of wires 7 wound on top of each other, and figure 3.b shows how the HIPping process results in a deformation of the wires 7 to obtain a dense material. Where the wires 7 touch each other, a diffusion bonding takes place to ensure a coherent material.

For some components 1 it will be relevant to use a solid mandrel 2, such as shown schematically in figure 4.a. This can be used both for components that are to remain solid by leaving the mandrel 2 as an integrated part of the component 1; such products may e.g. be flywheels and other rotating parts. However, it may also be used for embodiments where the mandrel 2 is removed. This may e.g. be relevant for mandrel geometries that are easier or cheaper to manufacture as solids, such as mandrels 2 having small cross sections.

Figure 4.b shows an alternative embodiment wherein the mandrel 2 is made from a material having open porosity. In the figure the structure is lattice-like, but other open structures are also covered by the invention. Such a type of mandrel 2 will typically be used for components 1 where the mandrel 2 is not removed but forms an inner part of the manufactured component 1. Such a method will typically be used to obtain a component 1 having high structural rigidity with a relatively low weight.

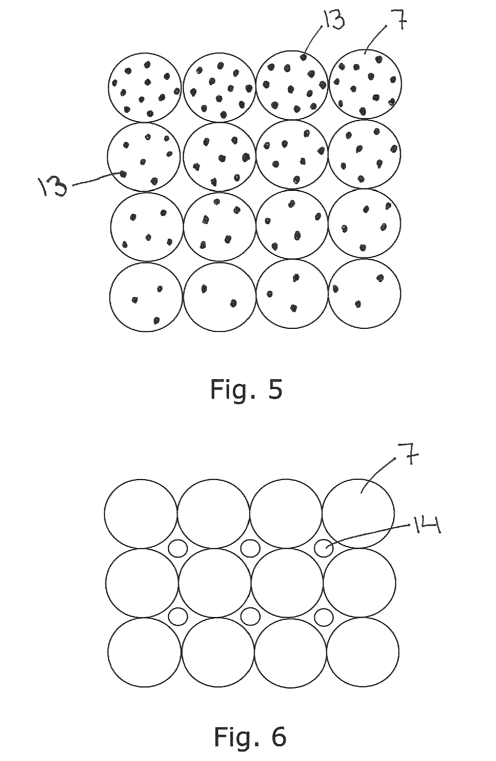

The wire 7 may be made from one or more of the following materials or alloys therefrom: titanium, beryllium, aluminium, magnesium, nickel, cobalt, vanadium, zirconium, platinum, iridium, rhenium, palladium, tungsten, and nitrinol shape memory alloy. All or some of the wire material may comprise reinforcement, such as SiC, BN, B or Al₂O₃ filaments. Figure 5 shows schematically a cross sectional view through wires 7 comprising varying amount of reinforcement 13, illustrated as dots inside the wires 7. The wires 7 have been arranged to produce a functionally graded material through the thickness of the component 1. Such grading can be used to vary the mechanical and/or the thermal properties through the thickness, e.g. to have a high stiffness or crack resistance near the outer surface of the manufactured component 1. One reason for the grading and not just having large amount of reinforcement in the outermost layers and none in the inner layers can be to avoid stress concentrations in the material due to abrupt changes in elastic properties.

Another way of incorporating reinforcement into the structure is to wind fibres 14 around the mandrel 2 concurrently with the winding of the wires 7. Such fibres 14 may e.g. be carbon fibres which can be used to increase the circumferential stiffness of the component 1 and/or to obtain a material having higher electrical conductivity. In the embodiment shown schematically in figure 6, fibres 14 are arranged in the interspaces between the wires 7. Hereby they will be surrounded by metallic wire material after HIPping whereby a good coherence can be ensured even if no diffusion bonding takes place between the fibres 14 and the wires 7.

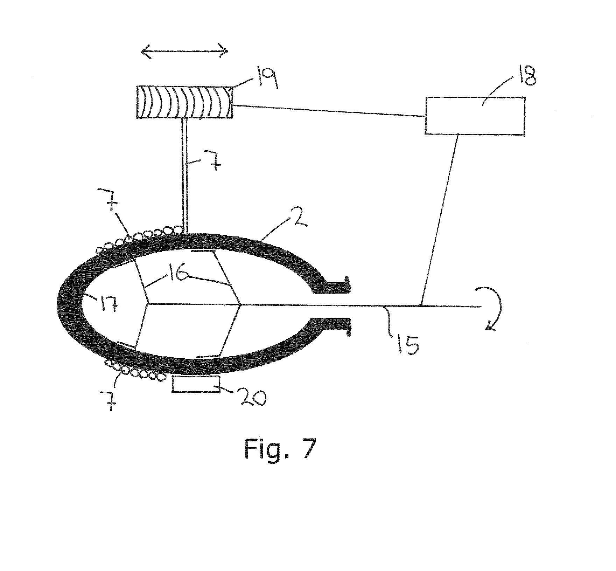

Figure 7 shows schematically an example of a system used for winding the wires 7 around the mandrel 2. The mandrel 2 is mounted on holding means 15 comprising collapsible arms 16 which may e.g. be spring loaded or telescopic to ensure a good grip against the inner surface 17 of the mandrel 2. The holding means 15 are rotated e.g. by a motor (not shown) under the control of a control unit 18. In the illustrated embodiment, the wire 7 is supplied from a reel 19 arranged above the mandrel 2. Only one reel 19 is shown in this figure, but more reels may be used for the supply of either the same type wire or for the supply of different types of wire. The reel 19 can be moved horizontally under the control of the control unit 18. By rotating the mandrel 2 while moving the reel 19 of wire horizontally, the component 1 will be build up. The stability of the system may be improved by arranging one or more support roller(s) 20 below the component 1 to lower the bending moment on the holding means 15. The vertical position of the roller 20 should be adjustable to match the actual thickness of the component 1 during winding of wire 7. This vertical movement may also be controlled by the control unit 18. As mentioned above, in order to wind the wires at the end opposite to the opening of the tank, the mandrels is tilted, possibly at various angles, during a part of the winding process. This tilting is not shown in the figure, but it will typically be around an axis perpendicular to the plane of the cross section shown in the figure. This will typically be done by titling the mandrel 2 together with the holding means 15 by use of tilting means (not shown) adapted to move the mandrel 2 in a pivotable manner within a predefined angular range. Possible designs of such tilting means will be well known to a person skilled in the art. The titling movement will typically be controlled by the control unit 18.

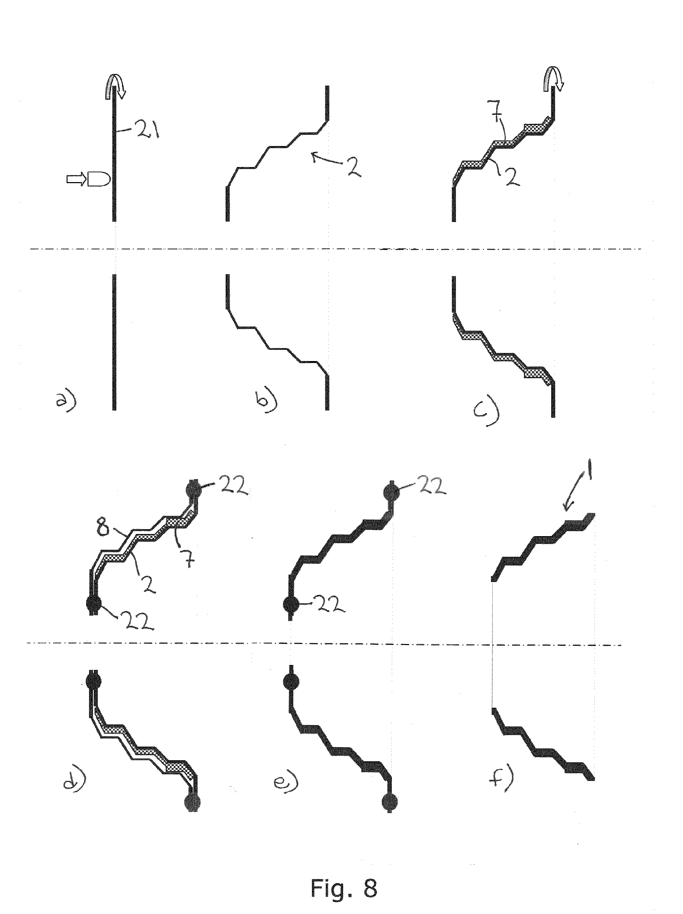

Figure 8 shows schematically another embodiment of the invention, wherein the canister 8 is incorporated into the structure. The illustrated method can e.g. be used for the production of an aero-engine casing. As a first step, a hollowed mandrel 2 in the form of an inner layer is produced from an alloy sheet such as by incremental forming, e.g. spinning, to obtain a mandrel 2 representing the basic inner features of the desired casing 1. The initial sheet 21 is shown in figure 8.a and the formed mandrel 2 is shown in figure 8.b. As shown in figure 8.c the wire 7, which may e.g. be made from titanium alloy, is wound around the mandrel 2 to provide a thick layer of wire 7 to the required inner component shape. This part of the process may comprise the use of a metal inert gas (MIG) welding attachment which can feed the wire 7 through the gun (not shown) whilst resistance heating the wire such that it deforms into position. I.e. the wire 7 will deform across its cross section to minimise the voids between adjacent wires 7, as well as deforming along its length to hold its required shape, and preferably provide a light tack to neighbouring wires 7; this will correspond to the geometries shown in figure 2. The MIG equipment will preferably be used at a reduced current such that plasma is not formed and there is just resistance heating across the wire from the gun to the component under manufacturing. A second, outer incrementally formed sheet 8 is then placed on the outside of the array of wires as shown in figure 8.d. The canister must enclose all parts to be HIP consolidated, and the seal is typically achieved by welding the outer sheet into a hollow vacuum tight container. The canister could include the mandrel as part of the canister or the mandrel could be completely within the canister. Alternatively, the canister can be comprised of the inner and outer sheets.

The inner and outer sheets, i.e. the mandrel 2 and the canister 8, are then electron beam welded along the inner and outer diameters. The welding 22 is shown as dots in the figures for illustrative purposes only. The second outer incrementally formed sheet does not have to fit the formed wire section precisely as it will subsequently be pressed into place. The electron beam sealing of the assembly will automatically evacuate the inside of the assembly as the welding process is undertaken in a vacuum.

The entire evacuated assembly is then placed in a HIP vessel for a pre-determined treatment (time, temperature and pressure) in order to consolidate the alloy wires 7 and containment sheet into a 100% dense alloy component as shown in figure 8.e. The wire array is of a similar shape and size after minor densification of the voids, and the incrementally formed sheet is pressed into the shape of the wire array and thus becomes part of the component. The excess part of the canister, such as the areas around the welding, is removed e.g. by machining to reveal the desired net-shape component 1 as shown in figure 8.f. The incorporation of the sheets forming the inner and outer parts of the component 1 can be used to give the component a high resistance to fatigue crack initiation.

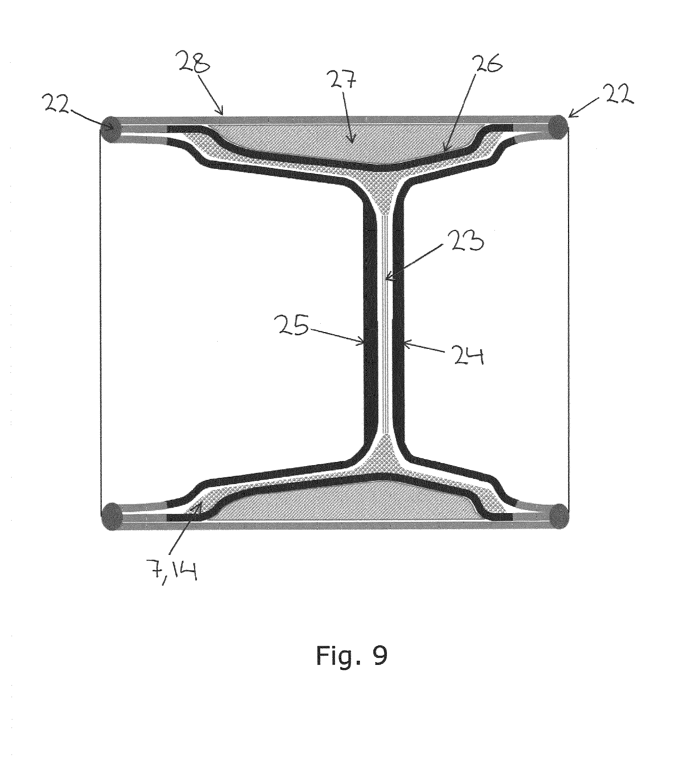

Figure 9 shows a cross sectional view of an exemplary wheel manufactured by a method according to the present invention. The central part of the wheel is a raft disc insert 23 comprising fibres and wires which are pre-wound or arranged on a flat mat. The raft disc 23 is arranged between two inner sections which can be considered a shallow section 24 and a deeper section 25, respectively, with reference to the illustrated geometry. They may e.g. be made by spinning which is a type of incremental forming, or they could be pressed or back extruded to shape. Wires 7 and possibly also fibres 14 can be wound around each of the inner sections, as described for the embodiments above. Wires 7 and possibly also fibres 14 are also wound around the assembly of the raft disc 23 and the inner sections 24, 25. Subsequently a cylindrical section 26 is arranged there around. The cylindrical section 26 could be incrementally formed from an extruded tube or a seam welded sheet. Alternatively, the wires 7 and possibly fibres 14 can be wound around the inside of the cylindrical section 26 before inserting the two inner sections 24, 25 and the raft disc insert 23. A fixed shape split cylindrical die 27 is arranged in the cylindrical cavity formed by the cylindrical section 26. An outer sealing tube 28 is then placed around the whole assembly, and the outer sealing tube 28 and the inner sections 24, 25 are welded together to form a sealed and evacuated enclosure containing the raft disc 23 and the wound wires 7 and possibly fibres 14. The whole assembly is then exposed to a HIPping process in the same way as described above for the other exemplary embodiments. As a final manufacturing step, the material close to the welds, the outer sealing tube 28, and the split cylindrical die 27 are removed, typically by machining. This design provides outer hoop stiffness and strength, a radial stiff and strong central disc that avoids cutting across fibres at hole features, a completely smooth surface resistant to fatigue crack initiation and growth, aesthetic quality surfaces, no weldments, and fine dimensional and shape control through the cylindrical die. It is also a cost effective manufacturing route. A wheel may be made with other dimensions and shapes than what is shown in figure 9 but in accordance with the overall design and manufacturing method as the one described.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Method of manufacturing a metallic component (1), the method comprising
- providing a mandrel or inner layer (2) of a metallic material,
- winding a plurality of layers of metallic wire (7) around the mandrel or inner layer (2) so that each of at least a majority of subsequent layers of wire (7) touches at least one adjacent layer of wire (7),
- providing an outer layer of a metallic material around the wound layers of wire (7) so that a canister (8) is obtained,
- evacuating and sealing the canister (8),
- placing the canister (8) in a hot isostatic pressing device (9) at high pressure and high temperature for a predetermined period of time in order to consolidate and diffusion-bond at least a majority of the windings of wire to form the metallic component (1).

2. Method according to claim 1, wherein the mandrel or inner layer (2) comprises one or more of the following surface features on an outer surface: groove, rib, strut.

3. Method according to claim 1 or 2, wherein the mandrel or inner layer (2) is made by additive manufacturing or by incremental forming.

4. Method according to any of the preceding claims, wherein the canister (8) and/or the mandrel/inner layer (2) is/are removed after the consolidation of the wire material (7).

5. Method according to any of claims 1 to 3, wherein the canister and/or the mandrel/inner layer (2) is/are not removed after the consolidation after the consolidation of the wire materials (7) and thus forms an integral part of the component (1).

6. Method according to any of the preceding claims, wherein the mandrel (2) is a solid part.

7. Method according to any of claims 1 to 5, wherein the mandrel (2) is made from a material having open porosity.

8. Method according to any of the preceding claims, wherein wires (7) made from a plurality of materials are used.

9. Method according to claim 8, wherein the plurality of wires (7) are arranged to produce a functionally graded material through the thickness of the component.

10. Method according to any of the preceding claims, wherein the wire (7) is made from one or more of the following materials or alloys therefrom: titanium, beryllium, aluminium, magnesium, nickel, cobalt, vanadium, zirconium, platinum, iridium, rhenium, palladium, tungsten, and nitrinol shape memory alloy.

11. Method according to any of the preceding claims, wherein at least some of the wire material (7) comprises reinforcement (13), such as SiC, BN, B or Al₂O₃ filaments.

12. Method according to any of the preceding claims, wherein fibres (14) are wound around the mandrel or inner layer (2) in combination with the metallic wires (7).

13. Component (1) manufactured according to any of the preceding claims.

14. Component (1) according to claim 13, wherein the component is a fuel tank.

15. Component (1) according to claim 13, wherein the component is a wheel.
